# EUROPEAN PATENT APPLICATION

(11) **EP 1 168 793 A2**
(43) Date of publication of application: **02.01.2002**
(21) Application number: 01202476.6
(22) Date of filing: 27.06.2001
(51) Int. Cl.: H04M 3/487, H04M 15/28

(54) **A method for establishing a telephone connection**

(30) Priority: 29.06.2000 NL 1015569
(71) Applicant: VSN Beheer B.V., 5803 AP Venray (NL)
(72) Inventor: Poels, Martinus Johannes Maria, 5803 AP Venray (NL)
(74) Representative: Valkonet, Rutger

(57) **Abstract**

The invention relates to a method for establishing a telephone connection between a calling party and a called party over a telephone line, comprising the steps of the transmission by the calling party of a signal regarding the identity of the called party to a local telephone switching centre, the forwarding of said identity signal to the remote telephone switching centre of the called party by the local telephone switching centre, whether or not via several intermediate telephone switching centres, and the simultaneous setup of a duplex speech connection over the telephone line, the receipt of a confirmation signal transmitted by the remote telephone switching centre and the forwarding of said confirmation signal to the calling party by the local telephone switching centre, in which signal the identity of the called party is confirmed, the sending of a message to the waiting, calling party, over the telephone line that has been set up, after receipt of the remote confirmation signal, simultaneously with the activation of the ringer in the called party's telephone, the receipt by the local telephone switching centre of a connection signal from the called party the moment the called party answers the telephone, as a result of which a telephone speech connection is established over the telephone line that has been set up.

In accordance with the invention, the method is to that end characterized in that the message that is sent to the calling party is generated and transmitted by a "point-of-interconnect" switching centre that is operative at some point between the local telephone switching centre and the remote telephone switching centre in the telephone line that has been set up.

## Description

The invention relates to a method for establishing a telephone connection between a calling party and a called party over a telephone line, comprising the steps of:
the transmission by the calling party of a signal regarding the identity of the called party to a local telephone switching centre;
the forwarding of said identity signal to the remote telephone switching centre of the called party by the local telephone switching centre, whether or not via several intermediate telephone switching centres, and the simultaneous setup of a duplex speech connection over the telephone line;
the receipt of a confirmation signal transmitted by the remote telephone switching centre and the forwarding of said confirmation signal to the calling party by the local telephone switching centre, in which signal the identity of the called party is confirmed;
the sending of a message to the waiting, calling party, over the telephone line that has been set up, after receipt of the remote confirmation signal, simultaneously with the activation of the ringer in the called party's telephone;
the receipt by the local telephone switching centre of a connection signal from the called party the moment the called party answers the telephone, as a result of which a telephone speech connection is established over the telephone line that has been set up.

The above sequence of steps or method is disclosed in International patent application no. PCT/US92/05204 - W093/00763, amongst other publications. Said publication shows the setup of a telephone connection between a calling party and a called party, wherein informational messages are transmitted to the calling party from the local telephone switching centre of the calling party while the called party's telephone set is ringing. To this end, the hardware and the software of both the local and the remote telephone switching centre have been modified, which modifications comprise analysing the setup of the telephone connection and subsequently having the telephone switching centres transmit the informational message in question.

A similar application is disclosed in US patent publication no. 4,811,382, wherein the hardware and the software of telephone switching centre in question, from where the informational message is transmitted to the calling party, has likewise been modified.

The above-described existing applications in particular have the drawback that every local telephone switching centres needs to be modified and converted for this additional telephone service, which is not only time-consuming and costly, but which is moreover not always possible, due to the limitations that the local telephone switching centre may have. In addition, every modification of the telephone switching centre needs to be carried out on a local level, so that the collaboration of the local telephone company is required. Also this has technical as well as financial drawbacks.

In order to be able to reproduce several informational messages, or other informational messages, it will furthermore be necessary to reset or reprogram every local telephone switching centre, which, given the current rapid information facilities, is a labourious, time-consuming and costly affair.

In addition, the modification (each time) of every local telephone switching centre for this additional telephone service may lead to capacity losses for the telephone company.

The object of the invention is to overcome the aforesaid drawback and to provide a procedure by means of which a message can be transferred to the calling party during the setting up of the telephone connection, and that in a more efficient, quicker and cheaper manner, irrespective of the configuration of the various local telephone switching centres and without said local telephone switching centres being involved.

In accordance with the invention, the method is to that end characterized in that the message that is sent to the calling party is generated and transmitted by a "point-of-interconnect" switching centre that is operative at some point between the local telephone switching centre and the remote telephone switching centre in the telephone line that has been set up.

Instead of being transferred to the still connected party via every telephone switching centre, the message is according to the invention applied to the telephone connection that has been set up at some point by a POI switching centre and transmitted to the party who is still connected, independently of the local telephone network and telephone companies. Only one POI switching centre present at some point in the telephone connection will suffice for generating and transmitting messages in accordance with the invention, and thus it is no longer necessary to update every local telephone switching centre with the hardware and software that is required for such a telephone service.

In accordance with the invention, the contents of the message can be partially determined by the identity signal or by the remote telephone switching centre. Thus the contents of the message can be changed in a very simple and especially quick manner from the POI switching centre that is operative at some point in the telephone connection the calling party and the called party, which makes the telephone service according to the invention versatile and efficient. In addition to this, the telephone service according to the invention is not confronted with all kinds of limitations in the various local telephone switching centres or by interference from the various (international) telephone companies.

Furthermore, the present method is simpler and more versatile than the applications that are known so far and that have been described above, which require local modification of every telephone switching centre.

Said message may be a commercial message, for example, or an indication of the costs of the telephone connection that is to be established, or a sound fragment or a musical fragment.

Since the message is played to the calling party while the called party's telephone is ringing, it is according to the invention possible to suppress the signal that indicates the ringing of the called party's telephone to the calling party while the message is being played to the calling party. Thus, the calling party will not be confronted with two different sound signals interfering with each other.

The method according to the invention is furthermore characterized in that the message is interrupted the moment the called party's telephone is answered and the telephone speech connection is established, which is done so that the calling party will not miss the called party's answering the phone.

The invention will now be explained in more detail with reference to a drawing, wherein:
Figure 1a shows the procedure for establishing a telephone connection according to the prior art;
Figures 1b and 1c show the procedure for establishing a telephone connection according to the invention;
Figure 2 schematically shows an example of the method according to the invention.

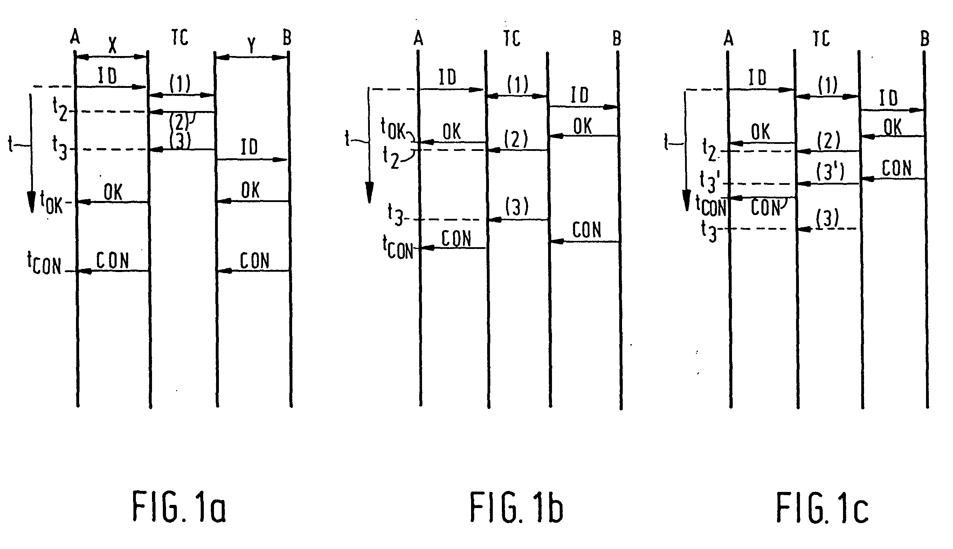

Using the current telephone technology, a telephone connection is established between a calling party and a called party according to a procedure comprising a sequence of steps. The setting up of a telephone line between a calling party A and a called party B, as well as the establishing of a telephone connection over said telephone line takes place in a telephone switching centre TC, which is programmed to have each telephone call take place in accordance with the said procedure. Although the telephone line and the telephone connection to be established over said telephone line may be routed via several telephone switching centres, in particular in the case of local calls and international calls, only one telephone switching centre TC is shown in Figures 1a - 1b for the sake of simplicity, which telephone switching centre functions as a local telephone switching centre both for the calling party A and for the called party B. For a better understanding of the method according to the invention, however, TC is indicated as the local telephone switching centre for the calling party A and as the remote telephone switching centre for the called party B. Generally, several so-called "point-of-interconnect" switching centres will be present between said telephone switching centres, which all form part of the (international) telephone network and which route the setting up of the telephone connection between A and B. Such POI switching centres interconnect the various telephone networks.

Figures 1a - 1c schematically show the steps and the associated signals, set off against vertical time scale t, of the methods for establishing a telephone connection according to the prior art (1a) and according to the invention (1b and 1c).

The programme, or the method for establishing a telephone connection, that is present in the telephone switching centre TC comprises a procedure comprising a sequence of steps, which procedure commences the moment calling party A picks up his receiver and thus creates a physical connection X to TC over the telephone network. In most cases, calling party A is first confronted with a so-called dial tone over said physical connection X, so that the calling party A can input a telephone number. If the calling party A has been disconnected by his telephone company, he will not hear a dial tone upon picking up his receiver, of course. The same obtains in case of an overload of the telephone switching centre TC, because insufficient physical connections X are available in that case.

The telephone number of the party B to be called, which is input by the calling party A, can be regarded as an identity signal ID, which is received by telephone switching centre TC and which is utilized for determining and creating a telephone line as well as for establishing a telephone connection with the called party B over said telephone line. In the case of trunk calls and international calls, said ID signal is routed to the remote telephone switching centre of the called party B via several telephone networks, which are interconnected by means of intermediate so-called "point-of-interconnect" switching centres, so as to be able to verify the identity of the called party B. Simultaneously with the transmission of the ID signal, a duplex speech connection is created over a telephone line.

The receipt of said ID signal at the remote end B results in two possible return signals; firstly, the called party B may not exist, because the number is not correct or has been disconnected, or the called party's line is busy, so that called party B cannot answer the call, and secondly the called party B is at liberty to answer the call. In the first situation, the verification of the ID signal will result in a refusal signal, which is sounded to the calling party A in the form of a busy signal.

In the other case, an OK signal will be generated at the remote end, which signal is transmitted not only to the calling party A, but which is moreover the signal for the telephone switching centre to make the telephone connection. This takes place by means of pulsed signals, which activate the ringer in the called party's telephone. The calling party A hears said ringing over his connection X. The moment called party B picks up the receiver, a so-called connection signal CON is sent over connection Y, which signal is transmitted to the calling party A, via telephone switching centre TC, over his connection X. At that moment the telephone connection has been made and a conversation between calling party A and called party B can take place over the duplex speech connection (1).

After inputting the telephone number, the calling party is frequently confronted with a message (2) via the telephone switching centre TC, which message may contain information about the costs of the telephone connection to be established, for example, or information about the person or instance B to be called. Said message is generally played after receipt of the ID signal by the telephone switching centre. Said playing of the message takes a specific period of time t₂-t₃, as is shown in Figure 1a. After termination (3) of said message, the procedure comprising the sequence of steps is resumed, whereby it is attempted in the above-described manner to establish the telephone connection by means of the ID signal, the confirmation signal OK and the connection signal CON.

The drawback of this sequence of steps is the fact that the calling party A is confronted with a longer waiting time, with the additional risk that after the message has been played during period t₂ and t₃, he will be confronted yet with the fact that his attempt to make the telephone connection with the called party B has been unsuccessful. This is caused by the fact that it may appear upon termination (3) of the message that it is not possible to establish the telephone connection with the called party B.

Said long waiting time, with the added risk of a failed attempt to make a connection, is not very efficient or customer-friendly. The sequence of steps of Figure 1a for establishing a telephone connection thus causes the telephone line to be engaged unnecessarily long, and thus leads to a less efficient utilization of the capacity of the telephone network by the telephone company.

In another application for reproducing a message to the calling party, said message is generated from the local telephone switching centre and played to the calling party A while the telephone connection is being set up, and in particular while the called party's telephone is ringing. To this end, the telephone switching centre is equipped with additional hardware and software facilities, which render the use of said telephone service somewhat inefficient or inflexible. After all, every local telephone switching centres needs to be modified and converted for this telephone service, which takes time and which costs money. Besides, the settings of every telephone switching centre must be changed in order to make it possible to adapt the message, which is likewise considered to be laborious and not very efficient.

The object of the method according to the invention is to overcome this drawback, to which end a sequence of steps is provided, wherein a message can be generated and transmitted in a more efficient and quicker manner, independently of the various telephone switching centres and without the intermediary of the various telephone companies. The method according to the invention is shown in Figures 1b and 1c.

After receipt of the ID signal from the calling party A by switching centre TC, a duplex speech connection (1) is established. After receipt of the confirmation signal OK from the remote side B of telephone switching centre TC, a message is generated over the just created duplex speech connection by a POI switching centre which is operative at some point between the local telephone switching centre and the remote telephone switching centre in the telephone line that has just been set up, which message is transmitted to the calling party via the local telephone switching centre. The receipt of the OK signal is also the sign for the telephone switching centre TC to set up the telephone connection between A and B by activating the ringer in B's telephone at regular intervals. Said activation of the ringer of the telephone of the called party B and the playing of the message to calling party A take place simultaneously, therefore.

In order to prevent a mixture of two signals disturbing each other, in this case the ringing signal and the message, the signal that indicates the ringing of the called party's telephone to the calling party A is suppressed by the POI switching centre. As shown in Figures 1b and 1c, the message has a duration t₂-t₃. As is shown in Figure 1b, said suppression of the ringing signal to calling party A is stopped upon termination of the message, and party A will hear said signal until 1 the so-called CONNECT signal is delivered at time T_{CON}: called party B answers the call and the telephone connection between A and B is thus established.

Figure 1c shows the situation wherein the call is answered by called party B while the message is being played to calling party A. As the time schedule of Figure 1c shows, the so-called CONNECT signal is received by the POI switching centre at some point between the starting time t₂ and the actual end time t₃ of the message. The message is interrupted almost exactly at time t₃, after which calling party A can directly have a telephone conversation with called party B.

As already mentioned above, the message may comprise any kind of information, for example further information about called party B or an indication about the costs of the telephone connection to be established. On the other hand, besides financial information, the informational message may also provide information of a technical nature, for example information about possible maintenance work on the network. The advantage of generating and transmitting messages from a POI switching centre that is operative at some point in the telephone connection that has been set up rather than from a local telephone switching centre that is specifically arranged for this purpose, as is currently the case, is that the contents of the text can be adapted more efficiently from a central location, without (drastic) modifications in every local telephone switching centre being required. Moreover, this telephone service according to the invention can function independently of the various telephone companies.

A more versatile application of the telephone service according to the invention is the adaptation of the contents of the message in dependence on the identity of the remote telephone switching centre or the identity of the called party B. Such an application is not possible with the prior art technology, such as the technology disclosed in WO 93/00763 and US-A-4,811,382, since this necessitates the conversion of every telephone switching centre.

After all, by transmitting the ID signal and subsequently receiving the confirmation (OK signal) it has already become apparent that the telephone connection with the called party B can be established. The only risk that the calling party A now runs is that the called party B will not be able to answer the call. In that case no CON signal will be received at time t₃ upon termination of the message, as is shown in Figure 1b.

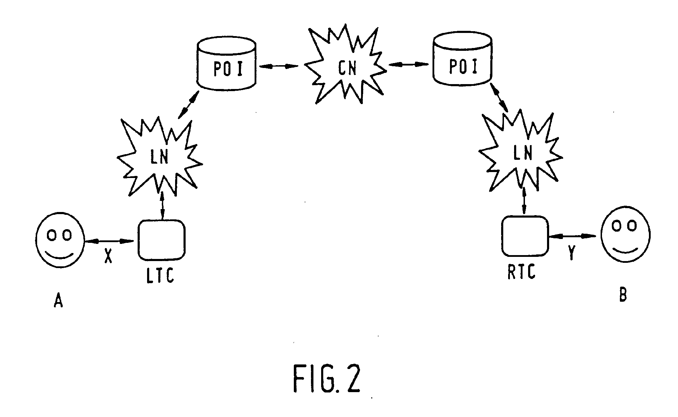

Figure 2 is another schematic representation of the method according to the invention, wherein like parts are indicated by the same reference indications. Calling party A will try to contact called party B via his local telephone switching centre LTC, the (international) telephone network and the remote telephone switching centre RTC. The local telephone networks LN, of which both telephone switching centres LTC and RTC form part, are interconnected by means of one or more "point-of-interconnect" centres POI and possibly a so-called "carrier network" CN. The setting up of the telephone connection between A and B, on the basis of the procedure that is shown in Figures 1a-1c, takes place via said interconnected telephone networks, whereby the setting up of the telephone connection is also analysed by a POI switching centre POI, which is operative at some point between the telephone switching centres LTC and RTC in the established telephone connection.

The moment the local telephone switching centre LTC receives the remote confirmation signal and the telephone of the called party B rings, one of the POI switching centres POI will interfere in accordance with the invention and generate and transmit a message over the open telephone connection to the party A. Furthermore the POI switching centre POI will suppress the ringing signals from the ringing telephone B, so that calling party A will 1 not be confronted with a mixture of two signals. As soon as called party B answers the telephone, the POI switching centre will interrupt the message and restore the duplex speech connection between the two parties A and B.

The invention furthermore relates to a telephone switching centre which is arranged for establishing telephone connections in accordance with the method of the invention.

## Claims

1. A method for establishing a telephone connection between a calling party and a called party over a telephone line, comprising the steps of:
the transmission by the calling party of a signal regarding the identity of the called party to a local telephone switching centre;
the forwarding of said identity signal to the remote telephone switching centre of the called party by the local telephone switching centre, whether or not via several intermediate telephone switching centres, and the simultaneous setup of a duplex speech connection over the telephone line;
the receipt of a confirmation signal transmitted by the remote telephone switching centre and the forwarding of said confirmation signal to the calling party by the local telephone switching centre, in which signal the identity of the called party is confirmed;
the sending of a message to the waiting, calling party, over the telephone line that has been set up, after receipt of the remote confirmation signal, simultaneously with the activation of the ringer in the called party's telephone;
the receipt by the local telephone switching centre of a connection signal from the called party the moment the called party answers the telephone, as a result of which a telephone speech connection is established over the telephone line that has been set up,
**characterized in that** the message that is sent to the calling party is generated and transmitted by a "point-of-interconnect" switching centre that is operative at some point between the local telephone switching centre and the remote telephone switching centre in the telephone line that has been set up.

2. A method according to claim 1, **characterized in that** the contents of the message are partially determined by the identity signal or by the telephone switching centre in question.

3. A method according to claim 1 or 2, **characterized in that** the signal indicating the ringing of called party's telephone is suppressed while the message is being played to the calling party.

4. A method according to any one of the claims 1 - 3, **characterized in that** said message is interrupted the moment the called party's telephone is answered and the telephone speech connection is established.

5. A telephone switching centre which is arranged for establishing telephone connections in accordance with the method as defined in any one or more of the preceding claims.
